# EUROPÄISCHE PATENTSCHRIFT

(11) **EP 3 898 349 B1**
(45) Veröffentlichungstag und Bekanntmachung des Hinweises auf die Patenterteilung: **22.01.2025**
(21) Anmeldenummer: 19805185.6
(22) Anmeldetag: 12.11.2019
(51) Int. Cl.: B60S 1/52

(54) **WISCHBLATTVORRICHTUNG**
WIPER BLADE DEVICE
DISPOSITIF DE BALAI D'ESSUIE-GLACE

(30) Priorität: 19.12.2018 DE 102018222268
(43) Veröffentlichungstag der Anmeldung: 27.10.2021
(73) Patentinhaber: Robert Bosch GmbH, 70442 Stuttgart (DE)
(72) Erfinder: RAPP, Harald, 77815 Buehl (DE)
(86) Internationale Anmeldenummer: PCT/EP2019/080984
(87) Internationale Veröffentlichungsnummer: WO 2020/126230

(56) Entgegenhaltungen:
- EP-A1- 3 056 395
- DE-A1- 102005 030 201
- FR-A1- 2 929 905
- FR-A1- 3 053 945

## Beschreibung

### Stand der Technik

Es ist bereits eine Wischblattvorrichtung mit zumindest einer Wischleiste und mit zumindest einer Fluidausgabeeinheit, welche zumindest eine erste Fluidaustrittsöffnung und zumindest eine zweite Fluidaustrittsöffnung aufweist, welche in Bezug auf eine Wischrichtung auf unterschiedlichen Seiten der Wischleiste angeordnet sind, vorgeschlagen worden. Stand der Technik hierzu ist aus der DE 10 2005 030201 A1, der FR 3 053945 A1 und der FR 2 929 905 A1 bekannt geworden.

### Offenbarung der Erfindung

Die Erfindung wird durch die Patentansprüche definiert.

Die Erfindung geht aus von einer Wischblattvorrichtung mit zumindest einer Wischleiste und mit zumindest einer Fluidausgabeeinheit, welche zumindest eine erste Fluidaustrittsöffnung und zumindest eine zweite Fluidaustrittsöffnung aufweist, welche in Bezug auf eine Wischrichtung auf unterschiedlichen Seiten der Wischleiste angeordnet sind.

Es wird vorgeschlagen, dass die erste Fluidaustrittsöffnung entlang der Wischleiste versetzt zu der zweiten Fluidaustrittsöffnung angeordnet ist.

Unter einer "Wischblattvorrichtung" soll in diesem Zusammenhang insbesondere zumindest ein Teil, insbesondere eine Unterbaugruppe, eines Wischblatts, insbesondere eines Scheibenwischblatts und vorteilhaft eines Fahrzeugscheibenwischblatts verstanden werden. Insbesondere kann die Wischblattvorrichtung auch das gesamte Wischblatt, insbesondere das gesamte Scheibenwischblatt und vorteilhaft das gesamte Fahrzeugscheibenwischblatt umfassen. Es ist denkbar, dass die Wischblattvorrichtung dabei zumindest als Teil eines Wischblatts in Flachbalkenbauweise und/oder zumindest als Teil eines Flachbalkenwischers und/oder als Wischblatt in Flachbalkenbauweise und/oder als Flachbalkenwischer ausgebildet ist. Vorzugsweise ist die Wischblattvorrichtung zu einem Ein-satz an einem Fahrzeug, insbesondere an einem Kraftfahrzeug, vorgesehen. Vorzugsweise ist die Wischblattvorrichtung zu einer Reinigung einer Fläche, insbesondere einer Fahrzeugscheibe an einem Fahrzeug vorgesehen. Insbesondere ist die Wischblattvorrichtung zu einer Reinigung einer Fahrzeugscheibe mit einem Fahrzeug, insbesondere einem Wischarm eines Scheibenwischers, gekoppelt. Der Scheibenwischer ist zu einer Reinigung einer Fahrzeugscheibe, insbesondere einer Front und/oder Heckscheibe eines Fahrzeugs vorgesehen. Unter "gekoppelt" soll in diesem Zusammenhang insbesondere formschlüssig und/oder kraftschlüssig verbunden verstanden werden. Insbesondere kann die Wischblattvorrichtung mit dem Wischarm unverlierbar gekoppelt sein. Unter "unverlierbar gekoppelt, befestigt oder verbunden" soll verstanden werden, dass zwei Bauteile derart gekoppelt, befestigt oder verbunden sind, dass die Kopplung oder Verbindung, insbesondere ausschließlich, mithilfe zumindest eines Werkzeugs gelöst werden kann. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Wischleiste" soll insbesondere eine Einheit aus einem elastischen Material mit einer Wischlippe verstanden werden, die dazu vorgesehen ist, zu einer Reinigung einer zu reinigenden Fläche, insbesondere einer Scheibenfläche, vorzugsweise einer Fahrzeugscheibe, in einem Kontakt über die zu reinigende Fläche bewegt zu werden. Bevorzugt ist die Wischleiste aus einem natürlichen oder künstlichen Elastomer, insbesondere aus Gummi, hergestellt. Unter einer "Wischlippe" soll in diesem Zusammenhang insbesondere eine elastische Lippe verstanden werden, die dazu vorgesehen ist, mit einer Wischkante eine Scheibe, insbesondere eine Fahrzeugscheibe, zu überstreichen, zu wischen und/oder zu reinigen. Insbesondere kann die Wischleiste zumindest teilweise und vorzugsweise vollständig zumindest einen Federschienenkanal ausbilden. Unter einem "Federschienenkanal" soll in diesem Zusammenhang insbesondere ein Kanal verstanden werden, der dazu vorgesehen ist, die Federschiene zumindest teilweise aufzunehmen. Durch den zumindest einen Federschienenkanal ist die zumindest eine Wischleiste mit der zumindest einen Federschiene verbindbar ausgebildet. Vorteilhaft ist die Wischleiste formschlüssig, insbesondere kraftschlüssig mit der Federschiene verbunden.

Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die zumindest eine Federschiene zumindest teilweise aus einem Metall oder einer Metalllegierung ausgebildet. Alternativ oder zusätzlich ist die Federschiene zumindest teilweise aus einem Kunststoff, aus einem Verbundwerkstoff oder aus einem anderen, einem Fachmann als sinnvoll erscheinenden Material ausgebildet. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Weiterhin vorteilhaft ist die Federschiene einteilig ausgebildet. Alternativ kann die Federschiene mehrteilig ausgebildet sein. Besonders vorteilhaft ist eine Krümmung der Federschiene längs der Federschiene in einem unbelasteten Zustand größer als eine Krümmung einer Fahrzeugscheibenoberfläche eines Kraftfahrzeugs, insbesondere einer Fahrzeugscheibe, über welche die Federschiene in wenigstens einem Betriebszustand geführt wird. Unter einem "elastisch veränderbaren" Objekt soll insbesondere ein Objekt verstanden werden, welches wiederholt verformbar ist, ohne dass dadurch das Objekt mechanisch beschädigt oder zerstört wird, und welches insbesondere nach einer Verformung selbstständig wieder einer Grundform zustrebt. Vorzugsweise umfasst die Wischblattvorrichtung zumindest eine Federschiene, vorzugsweise genau zwei Federschienen. Unter einem "makroskopischen Element" soll insbesondere ein Element mit einer Erstreckung von zumindest 1 mm, insbesondere von wenigstens 5 mm und vorzugsweise von mindestens 10 mm verstanden werden.

Unter einer "Fluidausgabeeinheit" soll insbesondere eine Einheit verstanden werden, die in zumindest einem Betriebszustand zumindest einen Fluidkanal ausbildet und zu einer Durchführung eines Reinigungsfluids durch den Fluidkanal vorgesehen ist. Die Fluidausgabeeinheit ist insbesondere dazu vorgesehen, zu einer Reinigung der Fahrzeugscheibe das Reinigungsfluid auf die Fahrzeugscheibe insbesondere zumindest durch zumindest eine Fluidaustrittsöffnung, insbesondere durch eine Vielzahl an, insbesondere ersten und/oder zweiten, Fluidaustrittsöffnungen auszugeben, insbesondere zu sprühen. Unter einem "Reinigungsfluid" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil, Frostschutzanteil und/oder Alkoholanteil aufweisen. Unter einem "Fluidkanal" soll insbesondere ein geometrisches Element und/oder eine kanalartige Ausnehmung verstanden werden, welches/welche in zumindest einem Betriebszustand zu einer Durchführung von Flüssigkeit, insbesondere von Reinigungsfluid, vorgesehen ist und insbesondere einen zumindest im Wesentlichen ovalen, polygonalen und vorzugsweise kreisförmigen Querschnitt aufweist. Unter der Wendung, dass die Fluidausgabeeinheit in zumindest einem Betriebszustand zu einer "Durchführung eines Reinigungsfluids" vorgesehen ist, soll insbesondere verstanden werden, dass die Fluidausgabeeinheit in dem Betriebszustand dazu vorgesehen ist, das Reinigungsfluid innerhalb der insbesondere gesamten Fluidausgabeeinheit zu verteilen und insbesondere bis zu einem ersten Ende der Fluidausgabeeinheit, insbesondere zu einem äußeren Endbereich des Wischblatts, und bis zu einem dem ersten Ende entgegengesetzten zweiten Ende der Fluidausgabeeinheit, insbesondere zu einem inneren Endbereich des Wischblatts, zu transportieren, wobei das Reinigungsfluid die Fluidausgabeeinheit, insbesondere zumindest einen Fluidkanal der Fluidausgabeeinheit, durchströmt. Insbesondere kann jeder Fluidaustrittsöffnung zumindest ein Fluidausgabeelement der Fluidausgabeeinheit, insbesondere ein Düsenelement der Fluidausgabeeinheit, zugeordnet sein und insbesondere in der Fluidaustrittsöffnung angeordnet sein. Insbesondere ist die Fluidaustrittsöffnung dazu vorgesehen, das Reinigungsfluid auszubringen, beziehungsweise in eine bestimmte Richtung zu lenken und/oder zu sprühen. Insbesondere öffnet die Fluidaustrittsöffnung die Fluidausgabeeinheit hin zu einer Umgebung. Unter einem "Düsenelement" und/oder einem "Fluidausgabeelement" soll in diesem Zusammenhang insbesondere ein Element verstanden werden, welches dazu vorgesehen ist, das Reinigungsfluid auszubringen, beziehungsweise in eine bestimmte Richtung zu sprühen. Das Düsenelement und/oder das Fluidausgabeelement kann aus einem Metall und/oder besonders vorteilhaft aus einem Kunststoff hergestellt sein. Bevorzugt ist/sind das Düsenelement und/oder das Fluidausgabeelement dazu vorgesehen, mit zumindest einem Fluidkanal gekoppelt zu sein. Insbesondere kann die Fluidausgabeeinheit mit der Wischleiste zumindest teilweise einstückig ausgebildet sein. Darunter, dass zwei Einheiten "teilweise einstückig" ausgebildet und/oder verbunden sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Unter "einstückig verbunden" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Unter einem "Betriebszustand" soll in diesem Zusammenhang insbesondere ein Zustand verstanden werden, in dem die Wischvorrichtung betriebsbereit für einen Wischvorgang und/oder einen Wischbetrieb ist und/oder sich in einem Wischbetrieb befindet, in welchem die Wischleiste insbesondere über eine Fahrzeugscheibe geführt wird und dabei vorteilhaft an der Fahrzeugscheibe anliegt. Unter einer "Wischrichtung" soll in diesem Zusammenhang insbesondere eine Richtung verstanden werden, in welche die Wischleiste in einem Betriebszustand über die zu wischende Fahrzeugscheibe geführt wird. Insbesondere ist die Wischrichtung tangential zu einer kreisbogenförmigen Bahn gerichtet, welche ein mit dem Wischblatt gekoppeltes Ende des Wischarms in zumindest einem Betriebszustand vollführt, und/oder parallel zu zumindest einer Tangente der kreisbogenförmigen Bahn an einem Punkt der kreisbogenförmigen Bahn, an welchem das gekoppelte Ende des Wischarms sich zu einem bestimmten Zeitpunkt befindet. Darunter, dass eine Öffnung entlang eines Referenzobjekts zu einer weiteren Öffnung versetzt ist, soll insbesondere verstanden werden, dass während einer gedachten Bewegung entlang des Referenzobjekts und/oder entlang einer Längserstreckungsrichtung des Referenzobjekts eine gedachte, quer zu der Längserstreckungsrichtung orientierte Gerade die Öffnungen bei einer Betrachtung entgegen einer Richtung einer Normalen einer Ebene, welche durch die Gerade und durch eine weitere, parallel zu der Längserstreckungsrichtung des Referenzobjekts verlaufende weitere Gerade aufgespannt wird, zu unterschiedlichen Zeitpunkten schneidet. Insbesondere schneidet eine Verbindungsgerade, welche die Öffnung und die weitere Öffnung miteinander verbindet und insbesondere durch die Öffnung und die weitere Öffnung verläuft, die weitere Gerade, welche insbesondere in einer selben Ebene wie die Verbindungsgerade liegt, in einem von 90 ° verschiedenen Winkel. Unter einer "Längserstreckung" soll in diesem Zusammenhang insbesondere eine größtmögliche Erstreckung verstanden werden. Unter einer "Längserstreckungsrichtung" soll in diesem Zusammenhang insbesondere eine Richtung verstanden werden, welche parallel zu der Längserstreckung verläuft. Unter einer "Erstreckung" eines Elements soll in diesem Zusammenhang insbesondere ein maximaler Abstand zweier Punkte einer senkrechten Projektion des Elements auf eine Ebene verstanden werden.

Durch die erfindungsgemäße Ausgestaltung der Wischblattvorrichtung kann vorteilhaft eine Wischblattvorrichtung mit einer ersten Fluidaustrittsöffnung, welche entlang der Wischleiste versetzt zu der zweiten Fluidaustrittsöffnung angeordnet ist, bereitgestellt werden. Insbesondere kann eine vorteilhafte Anordnung der ersten Fluidaustrittsöffnung und der zweiten Fluidaustrittsöffnung realisiert werden. Insbesondere kann eine optimierte Reinigungswirkung erzielt werden, wobei vorteilhaft eine Streifenbildung bei einem Reinigungsvorgang vermieden werden kann. Insbesondere kann ein Verbrauch eines Reinigungsfluids reduziert werden.

Erfindungsgemäß wird vorgeschlagen, dass die Fluidausgabeeinheit eine Vielzahl an ersten Fluidaustrittsöffnungen und eine Vielzahl an zweiten Fluidaustrittsöffnungen aufweist, welche entlang der Wischleiste versetzt zu den ersten Fluidaustrittsöffnungen angeordnet sind. Insbesondere sind die ersten Fluidaustrittsöffnungen und die zweiten Fluidaustrittsöffnungen beidseitig von der Wischleiste angeordnet, wobei die ersten Fluidaustrittsöffnungen und die zweiten Fluidaustrittsöffnungen jeweils rechts- oder linksseitig bezüglich der Wischleiste angeordnet sind. Unter "beidseitig von einer Wischleiste" soll in diesem Zusammenhang insbesondere auf zwei an der Wischleiste angrenzenden Seiten, insbesondere des Wischblatts und/oder der Fluidausgabeeinheit, die sich gegenüberliegen beziehungsweise von der Wischleiste getrennt sind, verstanden werden. Hierdurch kann insbesondere eine effiziente und gründliche Reinigung der Fahrzeugscheibe erfolgen. Insbesondere kann hierdurch eine Anzahl der ersten und insbesondere zweiten Fluidaustrittsöffnungen reduziert werden, wodurch insbesondere eine Verringerung eines Verbrauchs des Reinigungsfluids erzielt werden kann. Insbesondere schneidet eine Verbindungsgerade, welche eine der ersten Fluidaustrittsöffnungen und eine der zweiten Fluidaustrittsöffnungen miteinander verbindet und insbesondere durch eine der ersten Fluidaustrittsöffnungen und eine der zweiten Fluidaustrittsöffnungen verläuft, eine zu der Längserstreckungsrichtung des Referenzobjekts parallel orientierte Gerade in einem von 90 ° verschiedenen Winkel. Insbesondere sind die ersten und die zweiten Fluidaustrittsöffnungen abwechselnd entlang der Wischleiste versetzt. Insbesondere ergeben Verbindungslinien zwischen den versetzten und während der gedachten Bewegung entlang der Wischleiste direkt aufeinander folgenden Fluidaustrittsöffnungen einen Zick-Zack-Verlauf.

Erfindungsgemäß wird vorgeschlagen, dass ein Abstand zwischen unmittelbar benachbarten ersten Fluidaustrittsöffnungen und zwischen unmittelbar benachbarten zweiten Fluidaustrittsöffnungen entlang der Wischleiste zumindest abschnittsweise inhomogen ist. Hierdurch kann insbesondere eine an einen Verschmutzungsgrad angepasste Reinigung insbesondere der Fahrzeugscheibe erreicht werden. Insbesondere kann der Abstand in zumindest einem Abschnitt der Fluidausgabeeinheit homogen sein, wobei der jeweilige Abstand insbesondere in verschiedenen Abschnitten der Fluidausgabeeinheit variieren kann.

Erfindungsgemäß wird vorgeschlagen, dass der Abstand zwischen unmittelbar benachbarten ersten Fluidaustrittsöffnungen und zwischen unmittelbar benachbarten zweiten Fluidaustrittsöffnungen in Richtung eines Endbereichs der Wischleiste, insbesondere entlang der Längserstreckungsrichtung der Wischleiste betrachtet, zu- oder abnimmt. Hierdurch kann insbesondere eine an eine Verschmutzung angepasste Benetzung einer Fahrzeugscheibenoberfläche mit dem Reinigungsfluid erfolgen, wodurch vorteilhaft eine effektive Reinigung der Fahrzeugscheibenoberfläche ermöglicht werden kann. Insbesondere weist die Wischleiste entlang der Längserstreckungsrichtung der Wischleiste betrachtet einen inneren Endbereich und einen äußeren Endbereich auf. Insbesondere sind der innere und äußere Endbereich zu wenigstens einem Großteil jeweils durch eine Endkappe der Wischblattvorrichtung definiert. Unter einer "Endkappe" soll in diesem Zusammenhang insbesondere ein Bauteil verstanden werden, das dazu vorgesehen ist, an einem Ende einer Federschiene befestigt zu werden. Die Endkappe ist insbesondere dazu vorgesehen, in einem montierten Zustand einen Endabschluss eines Wischblatts bereitzustellen. Vorzugsweise ist die Endkappe zumindest teilweise aus einem Kunststoff gebildet. Vorzugsweise umgreift die Endkappe in wenigstens einem montierten Zustand zumindest einen Teil der Federschiene und/oder der Wischleiste. Vorzugsweise umfasst die Wischvorrichtung genau zwei Endkappen, jeweils eine für jedes Ende der Federschiene und/oder der Wischleiste. Unter einem "Endbereich" der Federschiene und/oder der Wischleiste soll insbesondere ein Bereich der Federschiene und/oder der Wischleiste verstanden werden, der bei einer Projektion der Federschiene und/oder der Wischleiste auf eine Ebene und bei einer Betrachtung in eine Längsrichtung der Federschiene und/oder der Wischleiste zumindest in einem von zwei an entgegengesetzten Enden der Federschiene und/oder der Wischleiste angeordneten Enden angeordnet ist. Unter einer "Längsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter dem Ausdruck "zu wenigstens einem Großteil" sollen in diesem Zusammenhang insbesondere zumindest 55 %, vorteilhaft zumindest 65 %, vorzugsweise zumindest 75 %, besonders bevorzugt zumindest 85 % und besonders vorteilhaft zumindest 95 % verstanden werden. In einem Betriebszustand bewegt sich die Wischleiste auf einer kreisbogenförmigen Bahn über die Fahrzeugscheibe, wobei der innere Endbereich eine kreisbogenförmige Bahn mit einem ersten Radius und der äußere Endbereich eine kreisbogenförmige Bahn mit einem zweiten Radius beschreibt. Insbesondere ist der erste Radius kleiner als der zweite Radius. Insbesondere kann der Abstand in Richtung eines Endbereichs der Wischleiste zumindest abschnittsweise erst zu- und dann abnehmen und vice versa, wodurch insbesondere besonders von einer Verschmutzung betroffene Bereiche der Fahrzeugscheibenoberfläche effektiv gereinigt werden können, wodurch vorteilhaft eine Kundenzufriedenheit gesteigert werden kann.

Darüber hinaus wird vorgeschlagen, dass der Abstand in Richtung eines äußeren Endbereichs der Wischleiste abnimmt. Insbesondere nimmt der Abstand in Richtung des äußeren Endbereichs der Wischleiste linear ab, insbesondere aufgrund eines linearen Zusammenhangs zwischen einem Radius und einer Bogenlänge einer kreisförmigen Bahn, welche verschiedene Bereiche der Wischleiste bei einer Wischbewegung vollführen. Dadurch kann insbesondere eine homogene Benetzung der Fahrzeugscheibenoberfläche mit dem Reinigungsfluid erfolgen. Insbesondere kann eine Rate einer linearen Abnahme des Abstands in Richtung eines äußeren Endbereichs der Wischleiste an Anforderungen hinsichtlich eines Einsatzgebiets und/oder -fahrzeugs, beispielsweise eines Baufahrzeugs oder eines PKWs, und/oder hinsichtlich klimatischer Bedingungen angepasst werden.

Insbesondere kann der Abstand zwischen unmittelbar benachbarten ersten Fluidaustrittsöffnungen von dem Abstand zwischen unmittelbar benachbarten zweiten Fluidaustrittsöffnungen verschieden sein.

Außerdem wird vorgeschlagen, dass der Abstand stets größer als 15 mm ist.

Insbesondere soll hier unter einem "Abstand" eine kürzeste Verbindungsstrecke zwischen zwei Fluidaustrittsöffnungen verstanden werden, welche innerhalb der Fluidausgabeeinheit, insbesondere direkt unter einer Oberfläche der Fluidausgabeeinheit, in welcher die Fluidaustrittsöffnungen angeordnet sind, verläuft. Hierdurch kann insbesondere eine sparsame Verwendung des Reinigungsfluids bei einem Wisch- und/oder Reinigungsvorgang und/oder eine effektiven Reinigung der Fahrzeugscheibe erfolgen, wodurch insbesondere laufende Kosten reduziert werden können und insbesondere ein Nachfüllvorgang des Reinigungsfluids in größeren Abständen durchgeführt werden kann.

Eine besondere hohe Reinigungswirkung und/oder ein reduzierter Verbrauch des Reinigungsfluids kann erreicht werden, wenn die ersten Fluidaustrittsöffnungen entlang der Wischleiste jeweils zumindest im Wesentlichen mittig zwischen zwei der zweiten Fluidaustrittsöffnungen angeordnet sind. Insbesondere stellt zumindest ein Großteil der ersten Fluidaustrittsöffnungen mit zwei der jeweiligen ersten Fluidaustrittsöffnungen am nächsten gelegenen zweiten Fluidaustrittsöffnungen Ecken eines gleichschenkligen, insbesondere gleichseitigen, Dreiecks dar. Unter der Wendung "zumindest ein Großteil" soll in diesem Zusammenhang insbesondere über mehr als 75 %, bevorzugt über mehr als 85 % und besonders bevorzugt über mehr als 95 % verstanden werden. Insbesondere bilden jeweils zwei der ersten und zwei der den ersten Fluidaustrittsöffnungen am nächsten gelegenen zweiten Fluidaustrittsöffnungen zu wenigstens einem Großteil ein Parallelogramm. Unter dem Ausdruck "zu wenigstens einem Großteil" sollen dabei insbesondere zumindest 75 %, vorteilhaft zumindest 85 %, besonders vorteilhaft zumindest 95 % verstanden werden.

Erfindungsgemäß wird vorgeschlagen, dass eine Anzahl von ersten Fluidaustrittsöffnungen gleich einer Anzahl von zweiten Fluidaustrittsöffnungen ist. Alternativ kann insbesondere die Anzahl der ersten Fluidaustrittsöffnungen um eins von der Anzahl der zweiten Fluidaustrittsöffnungen abweichen. Hierdurch kann vorteilhaft eine gleichmäßige Reinigungswirkung insbesondere auf den unterschiedlichen Seiten der Wischleiste in Bezug auf die Wischrichtung erzielt werden. Insbesondere kann dadurch eine kostengünstige Herstellung realisiert werden.

Darüber hinaus wird ein Wischblatt mit zumindest einer Wischblattvorrichtung vorgeschlagen.

Es wird vorgeschlagen, dass das Reinigungsfluid auf den beiden Seiten der Wischleiste versetzt aufgebracht wird. Vorteilhaft kann dadurch eine effiziente, komfortable und/oder reinigungsfluidsparende Reinigung der Fahrzeugscheibe erfolgen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer Fahrzeugscheibe und einen an der Fahrzeugscheibe angeordneten Scheibenwischer mit einem Wischblatt mit einer erfindungsgemäßen Wischblattvorrichtung,
- Fig. 2: das mit einem Wischarm des Scheibenwischers verbundene Wischblatt mit der erfindungsgemäßen Wischblattvorrichtung und
- Fig. 3: einen Teil des Wischblatts mit der erfindungsgemäßen Wischblattvorrichtung mit einer Fluidausgabeeinheit mit ersten und zweiten Fluidaustrittsöffnungen.

### Beschreibung des Ausführungsbeispiels

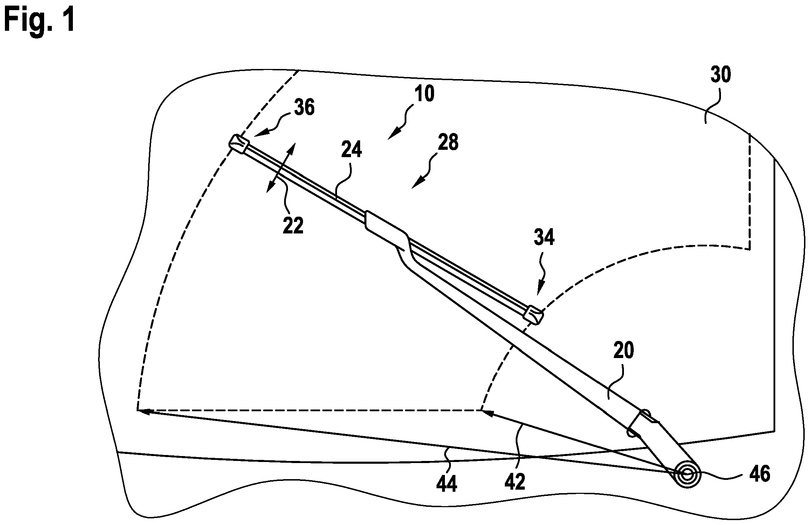

Figur 1 zeigt einen Teil einer Fahrzeugscheibe 30 eines Fahrzeugs und einen an der Fahrzeugscheibe 30 angeordneten Scheibenwischer 28. Der Scheibenwischer 28 ist zu einer Reinigung der Fahrzeugscheibe 30 vorgesehen. Die Fahrzeugscheibe 30 ist als eine Front- und/oder Heckscheibe ausgebildet.

Der Scheibenwischer 28 weist ein Wischblatt 24 mit einer erfindungsgemäßen Wischblattvorrichtung 10 auf. Die Wischblattvorrichtung 10 ist zu einem Einsatz an einem Fahrzeug, insbesondere einem Kraftfahrzeug, vorgesehen.

Das Wischblatt 24 ist dazu vorgesehen, zu einer Reinigung der Fahrzeugscheibe 30 über die Fahrzeugscheibe 30 zu wischen. Das Wischblatt 24 ist dazu vorgesehen, auf der Fahrzeugscheibe 30 befindlichen Schmutz und/oder ein durch die Fluidausgabeeinheit 14 auf die Fahrzeugscheibe 30 ausgegebenes Reinigungsfluid 26 von der Fahrzeugscheibe 30 wegzuwischen.

Das Reinigungsfluid 26 ist als Flüssigkeit ausgebildet. Das Reinigungsfluid 26 kann beispielsweise als Wasser, Alkohole oder Gemische, die einen Wasseranteil, Frostschutzanteil und/oder Alkoholanteil aufweisen, ausgebildet sein.

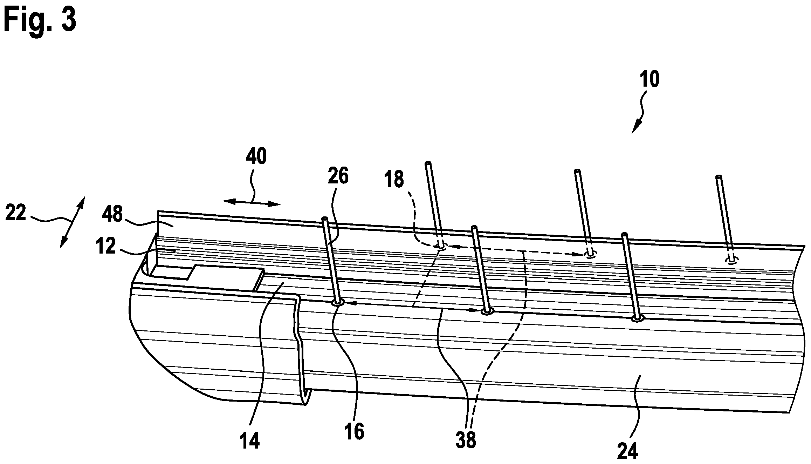

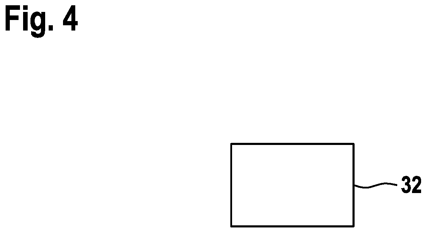

Die Wischblattvorrichtung 10 weist eine Wischleiste 12 auf. Die Wischleiste 12 weist eine Wischlippe 48 auf (vgl. Figur 3). Die Wischleiste 12 ist aus einem elastischen Material hergestellt. Die Wischleiste 12 ist aus Gummi hergestellt. Die Wischlippe 48 ist aus einem elastischen Material hergestellt. Die Wischlippe 48 ist aus Gummi hergestellt. Die Wischlippe 48 ist dazu vorgesehen, zu einer Reinigung der Fahrzeugscheibe 30 über die Fahrzeugscheibe 30 zu wischen. Die Wischlippe 48 kontaktiert bei der Wischbewegung unmittelbar die Fahrzeugscheibe 30. Die Wischleiste 12 bildet zwei Federschienenkanäle aus. Die Wischblattvorrichtung 10 weist zwei Federschienen auf. Die Federschienenkanäle sind dazu vorgesehen, die Federschienen aufzunehmen.

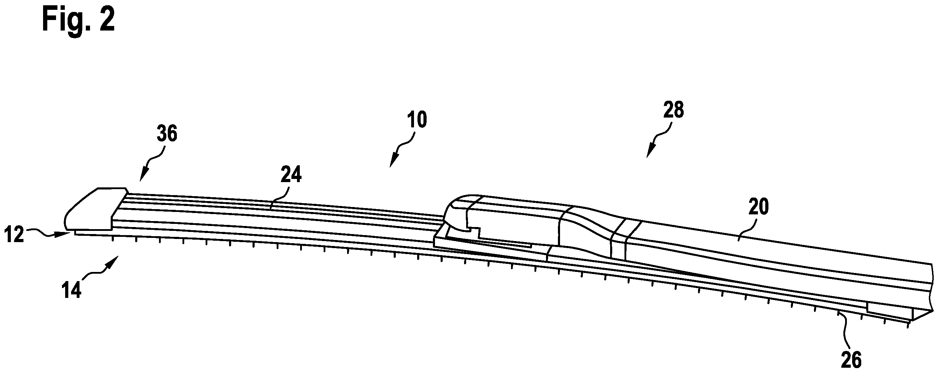

Der Scheibenwischer 28 weist einen Wischarm 20 auf. Die Wischblattvorrichtung 10 ist mit dem Wischarm 20 verbunden (vgl. Figuren 1 und 2). Der Wischarm 20 ist mit einer Antriebswelle 46 eines Wischerantriebs des Scheibenwischers 28 verbunden. Die Antriebswelle 46 treibt den Wischarm 20 in einer Bewegung relativ zu der Fahrzeugscheibe 30 an. Die Antriebswelle 46 treibt den Wischarm 20 in eine Wischrichtung 22 relativ zu der Fahrzeugscheibe 30 an. Die Antriebswelle 46 treibt das Wischblatt 24 mittels des Wischarms 20 in einer Wischbewegung relativ zu der Fahrzeugscheibe 30 an.

In einem Betriebszustand bewegt der Wischarm 20 während der Wischbewegung das mit dem Wischarm 20 verbundene Wischblatt 24 auf einer kreisbogenförmigen Bahn über die Fahrzeugscheibe 30. Ein innerer Endbereich 34 des Wischblatts 24 beschreibt bei der Wischbewegung eine kreisbogenförmige Bahn mit einem ersten Radius 42. Ein äußerer Endbereich 36 des Wischblatts 24 beschreibt bei der Wischbewegung eine kreisbogenförmige Bahn mit einem zweiten Radius 44. Der erste Radius 42 ist kleiner als der zweite Radius 44 (vgl. Figur 1).

Die Wischblattvorrichtung 10 weist eine Fluidausgabeeinheit 14 auf (vgl. Figur 3). Die Fluidausgabeeinheit 14 ist mit der Wischleiste 12 einstückig verbunden.

Die Fluidausgabeeinheit 14 ist dazu vorgesehen, zu einer Reinigung der Fahrzeugscheibe 30 ein Reinigungsfluid 26 auf die Fahrzeugscheibe 30 auszugeben und/oder zu sprühen (vgl. Figur 2). Das Reinigungsfluid 26 ist als ein Wischwasser ausgebildet.

Die Fluidausgabeeinheit 14 weist eine Vielzahl an ersten Fluidaustrittsöffnungen 16 auf. Die Fluidausgabeeinheit 14 weist eine Vielzahl an zweiten Fluidaustrittsöffnungen 18 auf. Die ersten Fluidaustrittsöffnungen 16 und die zweiten Fluidaustrittsöffnungen 18 sind zu einer Ausgabe des Reinigungsfluids 26 vorgesehen. Die ersten Fluidaustrittsöffnungen 16 und/oder in die zweiten Fluidaustrittsöffnungen 18 öffnen die Fluidausgabeeinheit 14 hin zu einer Umgebung.

Die ersten Fluidaustrittsöffnungen 16 und die zweiten Fluidaustrittsöffnungen 18 sind identisch zueinander ausgebildet. Die ersten Fluidaustrittsöffnungen 16 und die zweiten Fluidaustrittsöffnungen 18 sind über eine gesamte Längserstreckung der Wischleiste 12 verteilt.

Es ist vorstellbar, dass in den ersten Fluidaustrittsöffnungen 16 und/oder in den zweiten Fluidaustrittsöffnungen 18 jeweils ein Düsenelement der Fluidausgabeeinheit 14 angeordnet ist. Das Düsenelement kann aus einem Metall und/oder aus einem Kunststoff hergestellt sein.

Eine Anzahl der ersten Fluidaustrittsöffnungen 16 ist gleich einer Anzahl der zweiten Fluidaustrittsöffnungen 18.

Die ersten Fluidaustrittsöffnungen 16 und die zweiten Fluidaustrittsöffnungen 18 sind in Bezug auf die Wischrichtung 22 auf unterschiedlichen Seiten der Wischleiste 12 angeordnet. Die ersten Fluidaustrittsöffnungen 16 sind auf einer Linie parallel zu einer Längsrichtung 40 der Wischleiste 12 angeordnet. Die zweiten Fluidaustrittsöffnungen 18 sind auf einer Linie parallel zu der Längsrichtung 40 der Wischleiste 12 angeordnet.

Die ersten Fluidaustrittsöffnung 16 sind entlang der Wischleiste 12 versetzt zu den zweiten Fluidaustrittsöffnungen 18 angeordnet. Die ersten Fluidaustrittsöffnungen 16 sind entlang der Wischleiste 12 jeweils mittig zwischen zwei der zweiten Fluidaustrittsöffnungen 18 angeordnet (vgl. Figur 3). Jeweils eine der ersten Fluidaustrittsöffnungen 16 bildet mit zwei der ersten Fluidaustrittsöffnung 16 am nächsten gelegenen zweiten Fluidaustrittsöffnungen 18 Ecken eines gleichschenkligen Dreiecks. Jeweils eine der zweiten Fluidaustrittsöffnungen 18 bildet mit zwei der zweiten Fluidaustrittsöffnung 18 am nächsten gelegenen ersten Fluidaustrittsöffnungen 16 Ecken eines gleichschenkligen Dreiecks.

Ein Abstand 38 zwischen den unmittelbar benachbarten ersten Fluidaustrittsöffnungen 16 ist über eine gesamte Ausdehnung der Wischleiste 12 konstant. Der Abstand 38 zwischen den unmittelbar benachbarten zweiten Fluidaustrittsöffnungen 18 ist über eine gesamte Ausdehnung der Wischleiste 12 konstant.

Nach der Erfindung ist der Abstand 38 zwischen den unmittelbar benachbarten ersten Fluidaustrittsöffnungen 16 entlang der Wischleiste 12 inhomogen. Der Abstand 38 zwischen den unmittelbar benachbarten ersten Fluidaustrittsöffnungen 16 nimmt in Richtung eines Endbereichs der Wischleiste 12 zu ober ab.

Der Abstand 38 zwischen den unmittelbar benachbarten ersten Fluidaustrittsöffnungen 16 kann in Richtung des äußeren Endbereichs 36 der Wischleiste 12 abnehmen.

Nach der Erfindung ist der Abstand 38 zwischen den unmittelbar benachbarten zweiten Fluidaustrittsöffnungen 18 entlang der Wischleiste 12 inhomogen.

Der Abstand 38 zwischen den unmittelbar benachbarten zweiten Fluidaustrittsöffnungen 18 nimmt in Richtung eines Endbereichs der Wischleiste 12 zu oder ab.

Der Abstand 38 zwischen den unmittelbar benachbarten zweiten Fluidaustrittsöffnungen 18 kann in Richtung des äußeren Endbereichs 36 der Wischleiste 12 abnehmen.

Der Abstand 38 zwischen den unmittelbar benachbarten ersten Fluidaustrittsöffnungen 16 ist stets größer als 15 mm. Der Abstand 38 zwischen den unmittelbar benachbarten zweiten Fluidaustrittsöffnungen 18 ist stets größer als 15 mm.

Ein nicht beanspruchtes Verfahren zur Aufbringung des Reinigungsfluids 26 auf die Fahrzeugscheibe 30 mittels der Wischblattvorrichtung 10 weist einen Verfahrensschritt 32 auf. In dem Verfahrensschritt 32 wird das Reinigungsfluid 26 auf beiden Seiten der Wischleiste 12 aufgebracht. In dem Verfahrensschritt 32 wird das Reinigungsfluid 26 auf den beiden Seiten der Wischleiste 12 versetzt aufgebracht.

## Patentansprüche

1. Wischblattvorrichtung (10) mit zumindest einer Wischleiste (12) und mit zumindest einer Fluidausgabeeinheit (14), welche zumindest eine erste Fluidaustrittsöffnung (16) und zumindest eine zweite Fluidaustrittsöffnung (18) aufweist, welche in Bezug auf eine Wischrichtung (22) auf unterschiedlichen Seiten der Wischleiste (12) angeordnet sind, **wobei** die erste Fluidaustrittsöffnung (16) entlang der Wischleiste (12) versetzt zu der zweiten Fluidaustrittsöffnung (18) angeordnet ist und die Fluidausgabeeinheit (14) eine Vielzahl an ersten Fluidaustrittsöffnungen (16) und eine Vielzahl an zweiten Fluidaustrittsöffnungen (18) aufweist, welche entlang der Wischleiste (12) versetzt zu den ersten Fluidaustrittsöffnungen (16) angeordnet sind, **dadurch gekennzeichnet, dass** ein Abstand (38) zwischen unmittelbar benachbarten ersten Fluidaustrittsöffnungen (16) und zwischen unmittelbar benachbarten zweiten Fluidaustrittsöffnungen (18) entlang der Wischleiste (12) inhomogen ist, wobei der Abstand (38) zwischen unmittelbar benachbarten ersten Fluidaustrittsöffnungen (16) und zwischen unmittelbar benachbarten zweiten Fluidaustrittsöffnungen (18) in Richtung eines Endbereichs der Wischleiste (12) zu- oder abnimmt, wobei eine Anzahl von ersten Fluidaustrittsöffnungen (16) gleich einer Anzahl von zweiten Fluidaustrittsöffnungen (18) ist.

2. Wischblattvorrichtung (10) nach Anspruch 1, **dadurch gekennzeichnet, dass** der Abstand (38) in Richtung eines äußeren Endbereichs (36) der Wischleiste (12) abnimmt.

3. Wischblattvorrichtung (10) nach einem der vorhergehenden Ansprüche, **dadurch gekennzeichnet, dass** der Abstand (38) stets größer als 15 mm ist.

4. Wischblattvorrichtung (10) nach einem der vorhergehenden Ansprüche, **dadurch gekennzeichnet, dass** die ersten Fluidaustrittsöffnungen (16) entlang der Wischleiste (12) jeweils zumindest im Wesentlichen mittig zwischen zwei der zweiten Fluidaustrittsöffnungen (18) angeordnet sind.

5. Wischblatt (24) mit zumindest einer Wischblattvorrichtung (10) nach einem der vorhergehenden Ansprüche.

## Claims

1. Wiper-blade device (10) having at least one wiper strip (12) and having at least one fluid-dispensing unit (14), which has at least one first fluid-outlet opening (16) and at least one second fluid-outlet opening (18), which are arranged on different sides of the wiper strip (12) in relation to a wiping direction (22), wherein the first fluid-outlet opening (16) is arranged offset from the second fluid-outlet opening (18) along the wiper strip (12) and the fluid-dispensing unit (14) has a multiplicity of first fluid-outlet openings (16) and a multiplicity of second fluid-outlet openings (18), which are arranged offset from the first fluid outlet openings (16) along the wiper strip (12), **characterized in that** a distance (38) between directly adjacent first fluid-outlet openings (16) and between directly adjacent second fluid-outlet openings (18) along the wiper strip (12) is inhomogeneous, wherein the distance (38) between directly adjacent first fluid-outlet openings (16) and between directly adjacent second fluid-outlet openings (18) increases or decreases in the direction of an end region of the wiper strip (12), wherein a number of first fluid-outlet openings (16) is equal to a number of second fluid-outlet openings (18).

2. Wiper-blade device (10) according to Claim 1, **characterized in that** the distance (38) decreases in the direction of an outer end region (36) of the wiper strip (12).

3. Wiper-blade device (10) according to either of the preceding claims, **characterized in that** the distance (38) is always greater than 15 mm.

4. Wiper-blade device (10) according to one of the preceding claims, **characterized in that** the first fluid-outlet openings (16) are arranged in each case at least substantially centrally between two of the second fluid-outlet openings (18) along the wiper strip (12).

5. Wiper blade (24) having at least one wiper-blade device (10) according to one of the preceding claims.

## Revendications

1. Dispositif de balai d'essuie-glace (10) avec au moins une lame d'essuyage (12) et avec au moins une unité de distribution de fluide (14), qui présente au moins une première ouverture de sortie de fluide (16) et au moins une deuxième ouverture de sortie de fluide (18), qui sont agencées sur différents côtés de la lame d'essuyage (12) par rapport à une direction d'essuyage (22), la première ouverture de sortie de fluide (16) étant agencée de manière décalée le long de la lame d'essuyage (12) par rapport à la deuxième ouverture de sortie de fluide (18) et l'unité de distribution de fluide (14) présentant une pluralité de premières ouvertures de sortie de fluide (16) et une pluralité de deuxièmes ouvertures de sortie de fluide (18), qui sont agencées le long de la lame d'essuyage (12) de manière décalée par rapport aux premières ouvertures de sortie de fluide (16), **caractérisé en ce qu'**une distance (38) entre des premières ouvertures de sortie de fluide (16) directement voisines et entre des deuxièmes ouvertures de sortie de fluide (18) directement voisines est inhomogène le long de la lame d'essuyage (12), la distance (38) entre des premières ouvertures de sortie de fluide (16) directement voisines et entre des deuxièmes ouvertures de sortie de fluide (18) directement voisines augmentant ou diminuant en direction d'une zone d'extrémité de la lame d'essuyage (12), un nombre de premières ouvertures de sortie de fluide (16) étant égal à un nombre de deuxièmes ouvertures de sortie de fluide (18).

2. Dispositif de balai d'essuie-glace (10) selon la revendication 1, **caractérisé en ce que** la distance (38) diminue en direction d'une zone d'extrémité extérieure (36) de la lame d'essuyage (12).

3. Dispositif de balai d'essuie-glace (10) selon l'une quelconque des revendications précédentes, **caractérisé en ce que** la distance (38) est toujours supérieure à 15 mm.

4. Dispositif de balai d'essuie-glace (10) selon l'une quelconque des revendications précédentes, **caractérisé en ce que** les premières ouvertures de sortie de fluide (16) sont agencées le long de la lame d'essuyage (12) chacune au moins essentiellement au centre entre deux des deuxièmes ouvertures de sortie de fluide (18).

5. Balai d'essuie-glace (24) avec au moins un dispositif de balai d'essuie-glace (10) selon l'une quelconque des revendications précédentes.
